# EUROPEAN PATENT APPLICATION

(11) **EP 4 752 007 A1**
(43) Date of publication of application: **03.06.2026**
(21) Application number: 25219296.8
(22) Date of filing: 28.11.2025
(51) Int. Cl.: B60R 21/013

(54) **ROAD VEHICLE WITH ACTIVE SEATBELT**

(30) Priority: 29.11.2024 IT 202400027066
(71) Applicant: FERRARI S.p.A., 41100 Modena (IT)
(72) Inventor: LIMONTA, Gianmarco, 41100 MODENA (IT); COSTI, Giordano, 41100 MODENA (IT); DI IORIO, Fabio, 41100 MODENA (IT); FLUMERI, Alessandro, 41100 MODENA (IT); SCAPATICCI, Giuseppe, 41100 MODENA (IT); SECONDI, Andrea, 41100 MODENA (IT)
(74) Representative: Studio Torta S.p.A.

(57) **Abstract**

A road vehicle with a roll axis X, a pitch axis Y and a yaw axis Z; wherein the vehicle comprises a chassis defining a passenger compartment housing at least one seat for a user; wherein the vehicle comprises a seatbelt on each seat; wherein for each seatbelt an active tensioning device is provided that is configured to vary the tensioning of the seatbelt between a plurality of tensioning values within a range; wherein the active tensioning device is controlled by a control unit on the basis of at least one datum relating to the vehicle and/or the surrounding environment measured continuously by the at least one sensor to adjust continuously or in steps the tensioning of the seatbelt as the at least one datum measured by the at least one sensor changes.

## Description

### CROSS-REFERENCE TO RELATED APPLICATIONS

This patent application claims priority from Italian patent application no. 102024000027066 filed on November 29, 2024, the entire disclosure of which is incorporated herein by reference.

### Technical Field of the Invention

The technical field of reference for this invention is that relating to road vehicles, in particular sports road vehicles. For the purposes of this invention, the road vehicle comprises seatbelts on the seats where each seatbelt acts as personal protective equipment to restrain the user (passenger or driver) strapped in to the corresponding seat. In this technical context, this invention addresses the problem of how to make the seatbelt an active device capable of taking on different configurations under corresponding different circumstances.

### State Of The Art

As is well known, a road vehicle is a vehicle having a roll axis, a pitch axis and a yaw axis. From a structural point of view, the road vehicle comprises a chassis that defines a passenger compartment within which the driver and possibly at least one passenger are accommodated in special seats. With modern self-driving road vehicles, the driver can also be considered a passenger when delegating control of the vehicle to that vehicle. For this purpose, the term "user" shall mean both the driver and any passenger. The passenger compartment is limited at the front by a windscreen, usually made of glass, and houses a steering wheel projecting suspended towards the passenger seat. A seatbelt is known to be provided on each seat to act as personal protective equipment. As is well known, in the event of abrupt braking or a sudden stop (for example, due to an accident), the seatbelt restrains the user's body on the seat in such a way as to protect the user from free impact against the steering wheel or windscreen. In the absence of a seatbelt in the event of a severe impact, the user could even be thrown from the vehicle.

As is well known, every seatbelt comprises a strap designed to restrain the user's body, a retractor that allows the strap to be unwound to the desired length and to rewind the seatbelt when not in use. It is known to equip the retractor with a pretensioner configured to tighten the seatbelt in order to restrain the user's body against the seat while using the vehicle. In the event of abrupt braking or a sudden stop (for example, due to an accident), the pretensioner is configured to deliver an additional force of tension (called "slack") compared to normal use and this force limits the unwinding force so as to slow the unwinding of the seatbelt and make the user's body detach from the seat more slowly. According to an initial embodiment of the prior art, the pretensioner is mechanical and comprises a spring or an explosive charge (as in airbags) that is triggered in the event of a collision. Once it has been implemented, the mechanical pretensioner must be replaced. According to another well-known example, the pretensioner can be electric, that is, it consists of an electric motor. This second embodiment has the advantage that it can be reused without having to be replaced every time. Both embodiments just described are passive solutions because the pretensioner is only activated automatically in the event of an accident. Until this happens, the same level of tension is always applied to the seatbelt.

New road vehicles are currently equipped with an "Advanced Driver Assistance System" (called ADAS). This is an assembly of devices that can make vehicles safer to use by generating active protection. Thus, ADAS systems have the purpose of preventing accidents by trying to prevent the event from occurring. ADAS systems comprise a series of sensors connected to an in-vehicle control unit configured to monitor the motion of the vehicle and intervene in certain circumstances, for example emergencies. ADAS systems are the basis of self-driving vehicles and are used in many different areas of vehicle motion control. The main anti-collision systems include adaptive cruise control (ACC), which adjusts speed while driving by taking into account traffic conditions and the safe distance to be maintained from other cars. ADAS technology is also integrated into the system for automatic emergency braking (AEB), driver fatigue detection, lane control and warning of potential or imminent collision with other vehicles. For example, if an excessively close car is detected, all the systems are activated to prepare the car for a possible rear-end collision.

According to recent prior art, the ADAS system is connected to the seatbelt pretensioner, which then becomes a semi-active device. In fact, when the ADAS system detects an imminent collision, it transmits this datum to the control unit, which actuates the seatbelt pretensioner before impact to generate greater force to keep the user in the seat. After the impact, an opposite control can be provided, that is, the release of the tension to allow the user or rescuers to release the seatbelt. According to this prior art, in the absence of the danger of imminent impact detected by the ADAS system, the seatbelt tensioner performs passive work by delivering an essentially constant force to restrain the user.

Based on this most recent prior art, the purpose of this invention is to further improve the active aspect of the seatbelt.

### Subject and Summary of the Invention

According to this invention a road vehicle as defined in the appended claims is provided wherein the active control of the seatbelt has been extended by making the tensioner a continuously active device capable of varying the seatbelt tension even in events other than impending impact.

This invention therefore provides a road vehicle with a roll axis, a pitch axis and a yaw axis. The vehicle comprises a chassis that defines a passenger compartment and accommodates at least one seat for a user. The vehicle comprises a seatbelt on each seat. An active tensioning device configured to vary the tensioning of the seatbelt between multiple tensioning values within a range is provided for each seatbelt. The tensioning device is active and is controlled by a control unit on the basis of at least one datum relating to the vehicle and/or surroundings. The datum is measured continuously by at least one sensor as the seatbelt tension control is adjusted continuously or in steps as at least one measured datum of at least one sensor changes.

According to this invention, the control and actuation of the tensioner is implemented on the basis of at least one of the following parameters: the geolocation of the vehicle on a road map loaded within the control unit, the distance to at least one object outside the vehicle and a parameter indicating the vehicle dynamics set by the user.

For this purpose, special sensors such as a GPS sensor and/or a radar sensor and/or an ultrasonic sensor and/or a camera and/or an accelerometer and/or a speed sensor and/or a steering sensor are provided.

Significant differences between this invention and the previously described prior art are that the seatbelt tension is then actively modified not only in anticipation of an impending impact but continuously in order to provide the user with amplified feedback on the vehicle's handling. In fact, by increasing the driver's sensory perception in terms of increasing and decreasing seatbelt tension, the driver has additional information about the overall vehicle dynamics. Furthermore, another relevant aspect of this invention is the modularity of the tensioning control, which in the prior art with semi-active seatbelts only switched from the passive state to an active state with a single pre-impact safety tensioning level.

In addition, according to this invention the tensioning can also be changed at the request of the driver on a graduated scale where they can further request a raising or lowering of the average tensioning.

### Brief Description of the Drawings

For a better understanding of this invention, an embodiment thereof will now be described, purely by way of a non-limiting example, with reference to the accompanying drawings, wherein:
- Figure 1 is a schematic view of a road vehicle;
- Figure 2 is a schematic view of a passenger compartment of a road vehicle;
- Figures 3 and 4 are schematic views of one phase of using an active seatbelt;
- Figures 5-7 are schematic views of parameter examples used for active seatbelt control according to this invention;
- Figure 8 is a schematic view of a control example of the active seatbelt according to this invention.

### Preferred Embodiments of the Invention

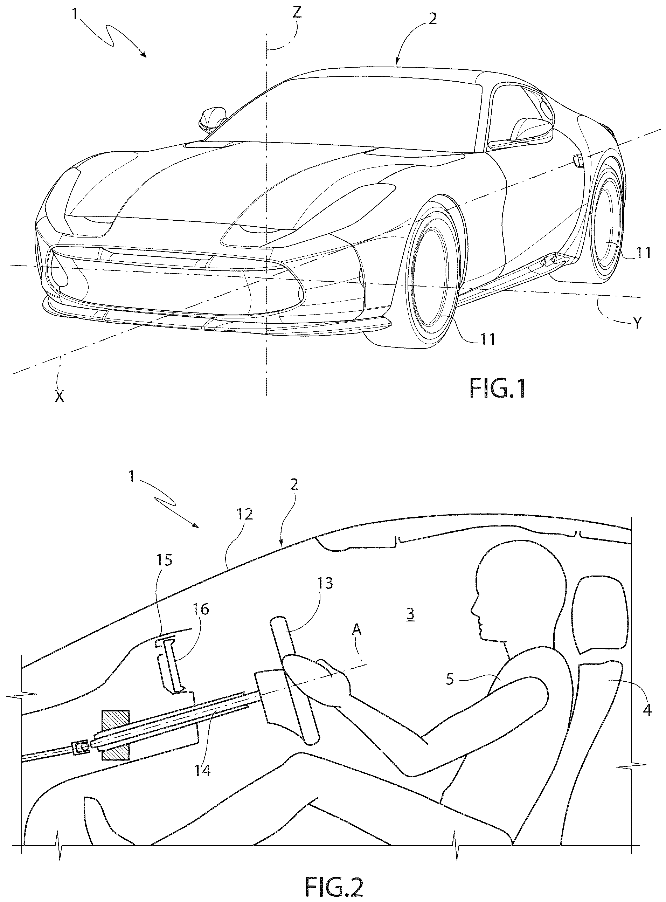

Figure 1 is a schematic view of a road vehicle 1 according to this invention with a roll axis X, a pitch axis Y and a yaw axis Z. Reference number 2 identifies the chassis of the vehicle 1, reference number 11 the drive wheels and reference number 12 the windscreen.

Figure 2 is a schematic view of a passenger compartment 3 of a road vehicle 1. As shown inside the passenger compartment 3, there is a seat 4 for the driver 5 so that the driver sitting on the seat 4 faces the windscreen 12 and can operate the steering wheel 13. Reference number 14 identifies the steering column, reference number 15 the dashboard and reference number 16 the driving display.

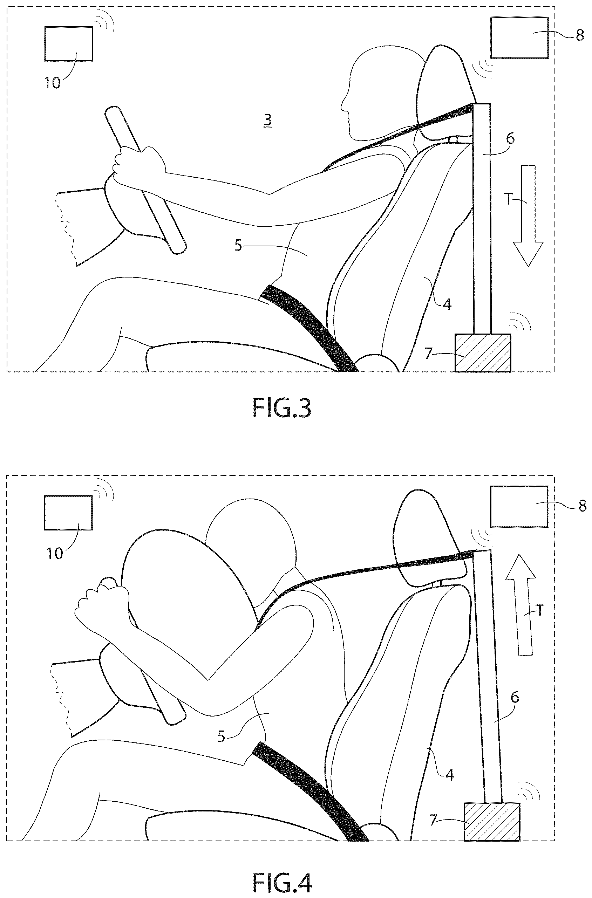

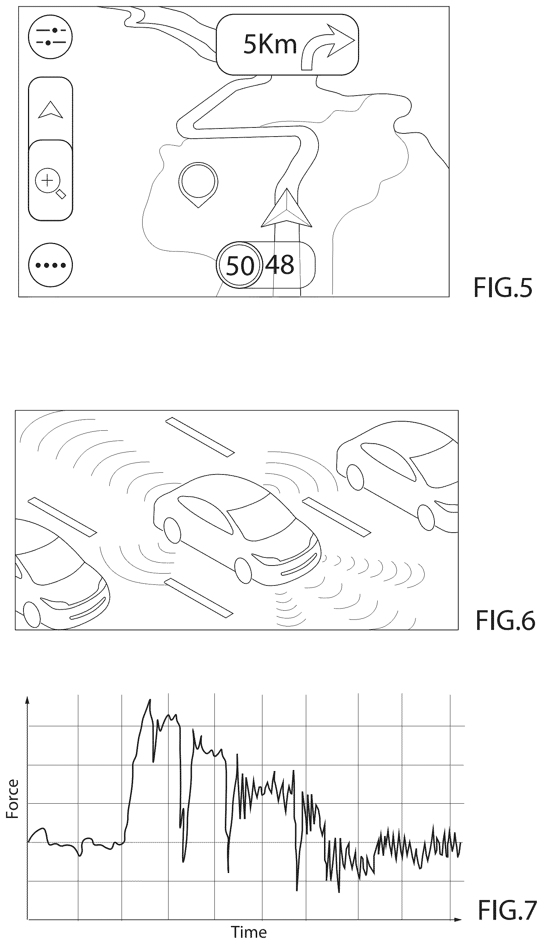

Figures 3 and 4 are schematic views of phases of using an active seatbelt according to this invention just before and during an impact. According to this invention, the seatbelt 6 is coupled to an active tensioning device 7 that modifies the tension of the seatbelt 6 continuously or in steps on the basis of at least one parameter measured by the sensor schematically shown with reference number 10. Specifically, the sensor 10 measures at least one datum of the vehicle or its surroundings and transmits it to the control unit 8 that continuously controls the active tensioner 7 based on the datum measured by the sensor 10. A peculiar aspect of this invention is, therefore, the fact that the tensioner 7 is always active. In the example in these figures, the sensor 10 can be a camera that continuously reads the distance to an external object and transmits this distance to the control unit 8, which, as the distance decreases, controls the progressive increase in the tensioning T of the seatbelt 6. This gradually increased tensioning T limits the unwinding S force so that during impact, the detachment of the user 5 from the seat 4 occurs more slowly. As described above, this invention has enlarged the active actuation of the seatbelt 6 by actually making it always active with the tensioner 7 always active, changing the tensioning T continuously. Figures 5-7 are schematic views of parameter examples used for continuous active seatbelt control according to this invention. Figure 5 shows how a datum can be information on the morphology and the road being travelled by means of a GPS sensor and a map loaded into the control unit. In this example, the system understands that a potentially fast bend will soon be approached and raises the seatbelt tensioning according to the type of bend. Figure 6 shows how the datum used for continuous controlling of the active seatbelt according to this invention can be the distance between the vehicle and an external object measured by a radar or ultrasonic sensor or by a video camera. Figure 6 shows how the datum used for continuous active seatbelt control according to this invention may be a datum relating to the vehicle dynamics as a function of the driver's driving style measured by accelerometers, speed sensors and/or steering sensors etc. Of course, this invention provides for the possibility that the seatbelt control is implemented on the basis of more than one of the parameters described (or all of said parameters).

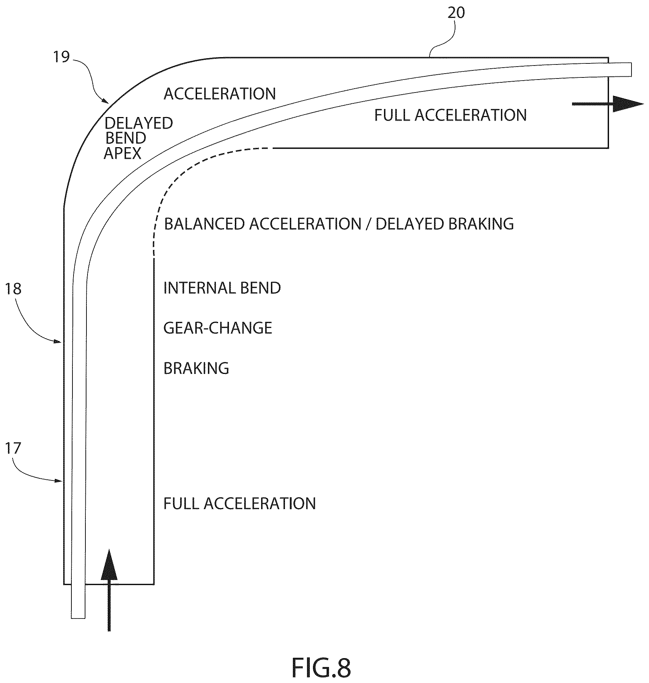

Figure 8 is a schematic view of an example of an active seatbelt control according to this invention in which there is a first straight starting section 17, a second gear-change section 18 in anticipation of the bend, a third bend section 19 and a final straight section 20. In this track, this invention can be implemented in the following manner:
- in the first section 17 during the start (at maximum acceleration), the seatbelts impose a variable pressure related to the change in acceleration;
- in the second section 18, the gear change is also emphasised by pressure peaks implemented via seatbelts, resulting in a kind of "thump" that accompanies the gear change;
- in the third bend section 19 before braking, the seatbelt tension is increased, modulated in the bend based on a control logic dependent on lateral acceleration, longitudinal acceleration and body motions.
- in the last section 20 coming out of a curve (accelerating) the previously implemented tension is gradually released, increasing the sensation of "squashing" against the seat.

Lastly, it is clear that modifications may be made to the invention described and illustrated herein, and variations produced thereto, without departing from the scope of this invention, as set forth in the claims.

## Claims

1. A road vehicle (1) having a roll axis (X), a pitch axis (Y) and a yaw axis (Z); wherein the vehicle (1) comprises a chassis (2) defining a passenger compartment (3) housing at least one seat (4) for a user (5); wherein the vehicle comprises a seatbelt (6) on each seat (4); **characterised by** each seatbelt (6) being provided with an active tensioning device (7) that is configured to vary the tensioning of the seatbelt (6) between a plurality of tensioning values within a range wherein the active tensioning device (7) is controlled by a control unit (9) on the basis of at least one datum relating to the vehicle and/or the surrounding environment measured continuously by the at least one sensor (10) to adjust continuously or in steps the tensioning of the seatbelt (6) as the at least one datum measured by the at least one sensor (10) changes.

2. The road vehicle (1) according to claim 1, wherein the datum measured by the at least one sensor (10) is the geolocation of the vehicle (1) on a road map loaded within the control unit (9) such that the tensioning of the seatbelt (6) is continuously adapted to the changing spatial development of the road route.

3. The road vehicle (1) according to any one of the preceding claims, wherein the datum measured by the at least one sensor (10) is the distance to the at least one object outside the vehicle such that the tensioning state of the seatbelt (6) is continuously adapted to vary with the distance between the vehicle and the external object.

4. The road vehicle (1) according to claim 3, wherein the at least one sensor (10) is a radar sensor and/or an ultrasonic sensor and/or a camera.

5. The road vehicle (1) according to any one of the preceding claims, wherein the datum measured by the at least one sensor (10) is a parameter indicative of the vehicle dynamics (1) set by the user such that the tensioning state of the seatbelt (6) is continuously adapted to vary with the vehicle dynamics (1) set by the user.

6. The road vehicle (1) according to claim 5, wherein the at least one sensor (10) is an accelerometer and/or a speed sensor and/or a steering sensor.

7. A method of operating a road vehicle (1), wherein the method comprises the steps of:
(a) providing a vehicle as claimed in claim 1;
(b) continuous measuring by at least one sensor (10) of a datum relating to the vehicle and/or its surroundings;
c) adjusting the tensioning of the seatbelt (6) according to the datum measured by at least one sensor (10).

8. The method according to claim 7, wherein step c) is implemented in such a way that the tensioning of the seatbelt (6) is continuously changed according to the datum measured by the at least one sensor (10).

9. The method according to claim 7, wherein step c) is implemented such that the tensioning of the seatbelt (6) is changed in steps according to the data measured by the at least one sensor (10).

10. The method according to any one of the preceding claims 7 to 9, wherein step b) is implemented by measuring at least one of the following parameters: geolocation of the vehicle (1) on a road map loaded within the control unit (9), distance to at least one object outside the vehicle, or a parameter indicative of the vehicle dynamics (1) set by the user.
